# EUROPÄISCHE PATENTSCHRIFT

(11) **EP 0 778 205 B1**
(45) Veröffentlichungstag und Bekanntmachung des Hinweises auf die Patenterteilung: **24.05.2000**
(21) Anmeldenummer: 96118866.1
(22) Anmeldetag: 26.11.1996
(51) Int. Cl.: B65B 35/54, B65G 57/32

(54) **Verfahren und Vorrichtung zum Bilden einer zweilagigen Reihenformation aus zweibahnig zugeführten Packungen der tabakverarbeitenden Industrie**
Method and device to form two-layered line formation of packages which are delivered on two tracks, in the tobacco processing industry
Procédé et dispositif pour établir une ligne à double couches de paquets délivrés sur deux voies, pour l'industrie du traitement du tabac

(30) Priorität: 09.12.1995 DE 19546055
(43) Veröffentlichungstag der Anmeldung: 11.06.1997
(73) Patentinhaber: TOPACK Verpackungstechnik GmbH, 21493 Schwarzenbek (DE)
(72) Erfinder: Schnabel, Wolfgang, 21465 Reinbek (DE); Dittrich, Joachim, 21031 Hamburg (DE); Junge, Nirian, 21029 Hamburg (DE)
(74) Vertreter: Herrmann, Günther

(56) Entgegenhaltungen:
- GB-A- 1 001 012
- GB-A- 1 549 939
- US-A- 4 413 462

## Beschreibung

Die Erfindung betrifft ein Verfahren zum Bilden einer zweilagigen Reihenformation aus auf zwei parallel nebeneinander verlaufenden Bahnen zugeführten Packungen der tabakverarbeitenden Industrie.

Die Erfindung betrifft außerdem eine Vorrichtung zum Bilden einer zweilagigen Reihenformation aus durch zwei parallel nebeneinander verlaufende Bahnfördermittel zugeführten Packungen der tabakverarbeitenden Industrie.

Produkte, insbesondere in Form von einzelnen Zigarettenpackungen, die aus zwei parallel nebeneinander verlaufenden Hochleistungsproduktlinien heraus überführt werden sollen, in eine einzige Produktlinie aus zwei übereinanderliegenden Pakkungsreihen zwecks Bildung von größeren Verpackungseinheiten bzw. -gebinden in Form von sogenannten Zigarettenstangen aus abgezählten Einzelpackungen, bereiten Probleme bei der gefesselten Entnahme in dem genannten Überführungsbereich.

Mit der US-PS 4 413 462 ist eine Einrichtung zur Ansammlung und Aufschichtung von Gegenständen in Form von Backwaren zu verpackungsgerechten Gruppen bekanntgeworden, bei der die auf übereinander angeordneten Führungsbahnen mittels abwärts bzw. aufwärts gerichteten Schiebefingem kontinuierlich transportierten Gegenstände über eine in Förderrichtung abwärts geneigte Rampe zusammengeführt bzw. aufeinandergelegt werden.

Der Erfindung liegt die Aufgabe zugrunde, die Förderleistung bzw. die Taktleistung des Förderflusses im Bereich der Schnittstelle zwischen Zigarettenpackungen zweibahnig zuführenden und einbahnig abführenden Produktlinien zu erhöhen.

Diese Aufgabe wird erfindungsgemäß dadurch gelöst, daß auf einer einheitlichen Ebene der beiden Bahnen zwei jeweils einer der beiden Bahnen zugeordnete Pakkungsreihen aus mehreren hintereinanderliegenden Packungen gebildet werden, daß die gebildeten Packungsreihen der beiden Bahnen wechselweise auf zwei vertikal zueinander beabstandete Ebenen angehoben bzw. abgesenkt werden, daß die Packungsreihen auf den beiden Ebenen seitlich zur Mitte hin in eine übereinanderliegende Anordnung verschoben werden, wobei gleichzeitig zwei weitere Packungsreihen auf der einheitlichen Ebene gebildet werden, und daß die beiden übereinander angeordneten Packungsreihen anschließend im Zuge ihrer Abförderung aufeinandergelegt werden.

Auf besonders effektive Weise lassen sich die Packungsreihen dadurch vereinigen, daß die Packungsreihen durch kontinuierliche Verminderung ihres vertikalen Abstandes aufeinandergelegt werden.

Gemäß einer Weiterbildung werden die vertikale Absenkbewegung und die horizontale Vorwärtsbewegung auf besonders elegante Weise dadurch miteinander kombiniert, daß die obere Packungsreihe bei der Abförderung entlang einer schiefen Ebene auf die untere Packungsreihe abgesenkt wird.

Um die Reihenbildung der Packungen und die Lagenbildung der Reihen von vor- und nachgeschalteten Aggregaten und Förderfrequenzen unabhängig zu machen, wird gemäß einer zweckmäßigen Weiterbildung vorgeschlagen, daß die Packungen zur Bildung der Packungsreihen von ihren parallelen Zuführbahnen nacheinander auf die einheitliche Ebene angehoben werden.

Die Reihenbildung auf der einheitlichen Ebene der jeweiligen Zuführbahnen erfolgt zweckmäßigerweise so, daß die Packungen durch stoßweisen Einzelvorschub hintereinandergereiht werden, wobei darüber hinaus trotz Einhaltung einer hohen Vorschubgeschwindigkeit eine sanfte bzw. schonende Aneinanderreihung der Packungen dadurch erreicht wird, daß die Packungen ihre Position innerhalb der Pakkungsreihe unter definierter Verdrängung eines sich vor ihrer der Förderrichtung zugewandten Stirnfläche ausbildenden Luftpolsters einnehmen.

Die Vorrichtung zur Durchführung des eingangs bezeichneten Verfahrens besteht darin, daß den Bahnfördermitteln jeweils zwei übereinanderliegende und durch Hubantriebsmittel relativ zu einer einheitlichen Reihenbildungsebene paarweise abwechselnd in entgegengesetzten Richtungen auf zwei vertikal zueinander beabstandete Überführungsebenen anhebbare bzw. absenkbare Aufnahmetaschen zugeordnet sind, welche in ihrer jeweiligen Wechelstellung auf der Reihenbildungsebene mit aus den Packungen Packungsreihen in den Aufnahmetaschen bildenden Einstoßfördermitteln und auf den vertikal beabstandeten Überführungsebenen mit die wechselweise anhebbaren bzw. absenkbaren Packungsreihen seitlich zu zentralen Vereinigungsfördermitteln überführenden und übereinanderliegend positionierenden Quertransportmitteln in Wirkverbindung stehen, wobei die auf der Reihenbildungsebene wirksamen Einstoßfördermittel und die auf den Überführungsebenen wirksamen Quertransportmittel in der jeweiligen Wechselstellung der Aufnahmetaschen gleichzeitig aktivierbar sind, und daß die Vereinigungsfördermittel eine vertikale Förderkomponente für wenigstens eine Packungsreihe aufweisende Längsfördermittel umfassen.

Gemäß einer besonders zweckmäßigen Ausgestaltung umfassen die Längsfördermittel eine die obere Packungsreihe aufnehmende, in Förderrichtung abwärts geneigte Rampe, auf der die obere Packungsreihe sich im Zuge der Vorwärtsbewegung kontinuierlich auf die untere Packungsreihe absenkt.

Eine der erfindungsgemäßen Vorrichtung von vor- und nachgeordneten Aggregaten unabhängig machende Ausgestaltung besteht darin, daß zwischen den parallelen Bahnfördermitteln und der Reihenbildungsebene Hubfördermittel vorgesehen sind, welche in der vorgegebenen Taktfrequenz Einzelpackungen auf die Reihenbildungsebene überführen.

Die Aneinanderreihung der Einzelpackungen innerhalb der Aufnahmetaschen wird am effektivsten dadurch realisiert, daß auf der Reihenbildungsebene Einzelpackungen beaufschlagende Einstoßfördermittel vorgesehen sind.

Um bei einer relativ hohen Stößelgeschwindigkeit gleichzeitig den Aufprall einzelner Packungen abzumildern bzw. eine schonende Überführung im Bereich der Pakkungsstirnseiten zu gewährleisten, ist gemäß einer zweckmäßigen Weiterbildung den Einstoßfördermitteln eine die Aufnahmetaschen auf der Reihenbildungsebene an ihrer den Quertransportmitteln zugewandten offenen Längsseite unter Aufrechterhaltung eines definierten Abstandsspalts begrenzende ortsfeste Abdeckung zugeordnet.

Um im Überführungsbereich eventuell auftretende Störungen leichter beheben zu können, wird außerdem vorgeschlagen, daß jeweils übereinander angeordnete Aufnahmetaschen als von den Hubantriebsmitteln lösbare Kassette ausgebildet sind, welche leicht ausgebaut und gegebenenfalls entleert werden kann.

Der mit der Erfindung erzielte Vorteil besteht in der hundertprozentigen Arbeitstaktnutzung der Überführungsmittel, d. h. jeder Arbeitstakt ist ein Fördertakt, wodurch eine schnelle Entnahme aus dem Abgabefluß zweier Produktlinien, insbesondere einer doppelbahnigen Folieneinschlagmaschine, gewährleistet ist.

Die Erfindung wird nachstehend anhand des in den beigefügten Abbildungen dargestellten Ausführungsbeispiels näher erläutert.

Hierbei zeigen:
- Figur 1: eine Draufsicht auf eine Reihenbildungs- und Lagenbildungsvorrichtung am Abgabeende einer doppelbahnigen Folieneinschlagmaschine,
- Figur 2: eine Seitenansicht der Vorrichtung gemäß Figur 1 mit zugeordneten Antriebsmitteln für diverse Förderorgane und
- Figuren 3 - 5: Ansichten auf unterschiedliche Arbeitsstellungen der Vorrrichtung entlang der Linie A-B gemäß Figur 2 mit zugeordneten Antriebsorganen.

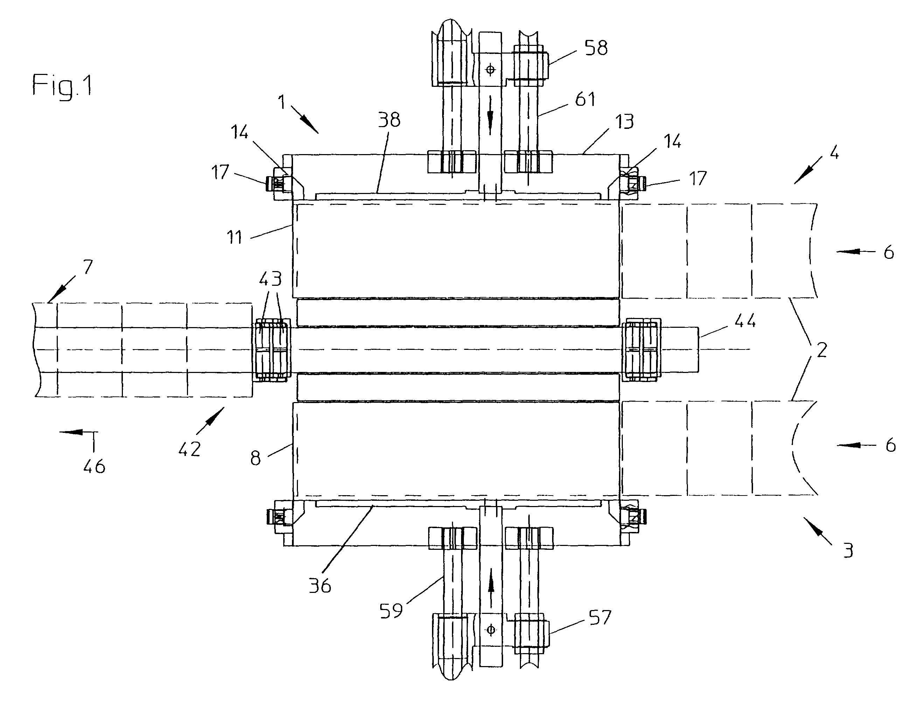

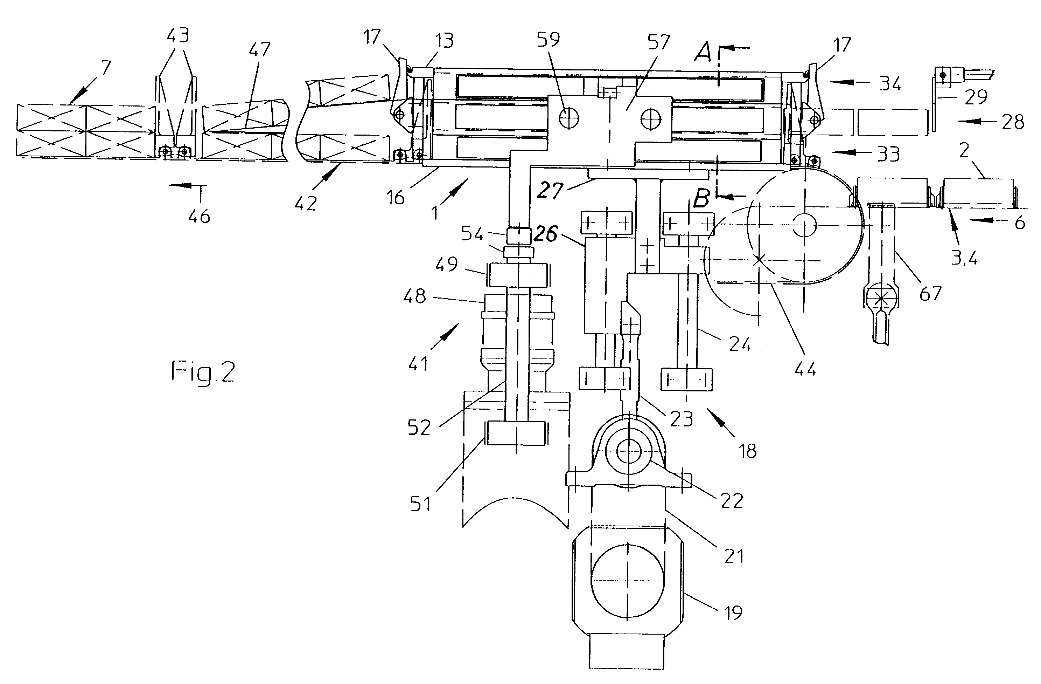

Gemäß den Figuren 1 und 2 ist die Überführungsvorrichtung 1 nach der Erfindung für die Handhabung von Zigarettenpackungen 2 vorgesehen, welche auf zwei parallelen Bahnfördermitteln 3 und 4 in Form getaktet antreibbarer Transportbänder von einer nicht dargestellten doppelbahnigen Folieneinschlagmaschine in Pfeilrichtung 6 zugeführt werden, und aus denen eine zweilagige Reihenformation 7 aus jeweils fünf abgeteilten Zigarettenpackungen 2 pro Reihe gebildet wird. Die unterteilten Reihenformationen 7 werden in einem nicht dargestellten sogenannten Stangenpacker zu Zigarettenstangen in Form von Zehnerblocks verpackt.

Jedem Bahnfördermittel 3 bzw. 4 sind zwei jeweils fünf Zigarettenpackungen 2 fassende Aufnahmetaschen 8, 9 bzw. 11, 12 zugeordnet, die jeweils als Doppeltaschen in Form einer von der Überführungsvorrichtung 1 lösbaren Kassette 13 ausgebildet sind. Die Kassette 13 ist zu diesem Zweck in Führungen 14 eines Trägergehäuses 16 eingelassen und durch Sperrklinken 17 arretiert.

Am Trägergehäuse 16 greifen Hubantriebsmittel 18 an, die aus einem Antriebsmotor 19, einem Riementrieb 21, einer Antriebswelle 22, Exzenterkurbeln 23 sowie daran angelenkten, entlang ortsfester Führungsstangen 24 auf- und abbewegbaren Hubschlitten 26 bestehen. Eine Stützplatte 27 des Hubschlittens 26 ist mit dem Trägergehäuse 16 fest verbunden.

Die Hubantriebsmittel 18 sind derart eingerichtet, daß die doppelten Aufnahmetaschen 8, 9 bzw. 11, 12 jeweils entgegengesetzt und relativ zu einer mittleren Reihenbildungsebene (Pfeil 28) mit zugeordneten Einstoßfördermitteln 29 vertikal abwärts (Pfeil 31) bzw. aufwärts (Pfeil 32) auf zueinander beabstandete Überführungsebenen (Pfeile 33, 34) versetzbar sind. Den Einstoßfördermitteln 29 ist funktionsmäßig eine die jeweiligen Aufnahmetaschen 8 bis 12 auf der Reihenbildungsebene 28 an ihrer einen offenen Längsseite unter Aufrechterhaltung eines definierten Abstandsspalts begrenzende ortsfeste Abdeckung 30 zugeordnet.

Den Aufnahmetaschen 8, 9 bzw. 11, 12 sind in Höhe der Überführungsebenen 33 und 34 als Stößel 36 bis 39 ausgebildete Quertransportmittel 41 zugeordnet, deren Stößel die Aufnahmetaschen durch deren offene Längsseiten hindurch durchdringen und Reihen abgezählter Zigarettenpackungen zu zentralen Vereinigungsfördermitteln 42 überführen, welche als mit Mitnehmern 43 besetzte, als Endlostransportband ausgebildete Längsfördermittel 44 sowie eine in Förderrichtung (Pfeil 46) abwärts führende Rampe 47 umfassen.

Die Antriebsorgane der Quertransportmittel 41 umfassen einen Antriebsmotor 48, Riementriebe 49, 51, Antriebswellen 52, 53, exzentrische Schubkurbelantriebe 54, 56 sowie Schlitten 57, 58 und Schlittenführungen 59, 61 für die Stößel 36 bis 39.

Mit 62 ist eine abschwenkbare Abdeckung im Bereich der Überführungsvorrichtung 1 für die über ein Bodenblech 63 der Vereinigungsfördermittel 42 abtransportierten oberen Packungsreihen bezeichnet. Die unteren Packungsreihen werden über ein Bodenblech 64 abgeschoben. Mit 66 ist ein ortsfester Stützträger für das darüber hinweggleitende Transportband der Längsfördermittel 44 bezeichnet.

Darüber hinaus sind zwischen den Bahnfördermitteln 3, 4 und der Reihenbildungsebene 28 im Wechsel mit den hin- und herfahrbaren Einstoßfördermitteln 29 auf- und abbewegbare Hubfördermittel 67 gemäß Figur 2 vorgesehen.

Die Wirkungsweise ist wie folgt:

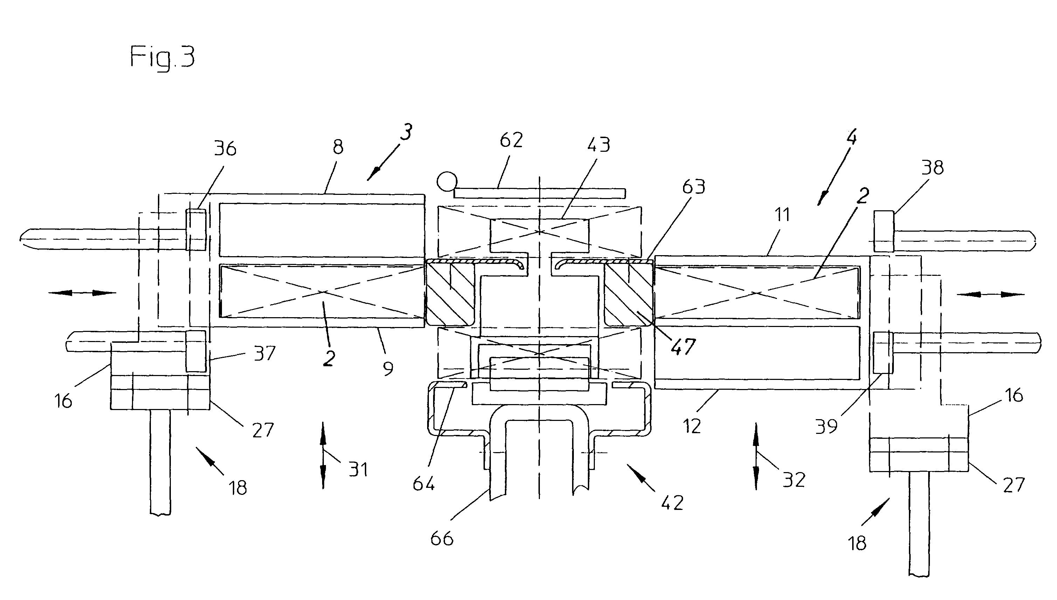

Die auf den beiden parallelen Bahnfördermitteln 3 und 4 zugeführten Zigarettenpackungen 2 werden einzeln durch die zugeordneten Hubfördermittel 67 auf das Niveau der Reihenbildungsebene 28 angehoben und durch eine Vorschubbewegung der Einstoßfördermittel 29 in die in der Reihenbildungsebene 28 bereitstehenden Aufnahmentaschen 9 und 11 gemäß Figur 3 eingeschoben. Um den stirnseitigen Aufprall der Zigarettenpackungen 2 an der geschlossenen Stirnseite der Aufnahmetaschen bzw. an der rückwärtigen Stirnseite der zuvor eingeschobenen Zigarettenpackung zu vermindern, erfolgt eine sanfte Abbremsung durch eine definierte Verdrängung des sich zwischen der Stirnfläche der Zigarettenpackungen sowie zwischen einer Packungsstirnfläche und der Stirnwand der Aufnahmetaschen ausbildenden Luftpolsters über den zwischen der seitlichen Abdeckung 30 und der offenen Längsseite der Aufnahmetaschen gebildeten Luftspalt. Auf diese Weise werden nach und nach alle Zigarettenpackungen 2 in den Aufnahmetaschen 9 und 11 aneinandergereiht, wobei im Wechsel die Hubfördermittel 67 Zigarettenpackungen vor die zurückgezogenen Einstoßfördermittel 29 plazieren und nach erfolgtem Packungseinstoß die wieder abgesenkten Hubfördermittel 67 eine neue Zigarettenpackung aufnehmen, die durch einen erneuten Fördertakt der Bahnfördermittel 3 und 4 vorgeschoben wurde.

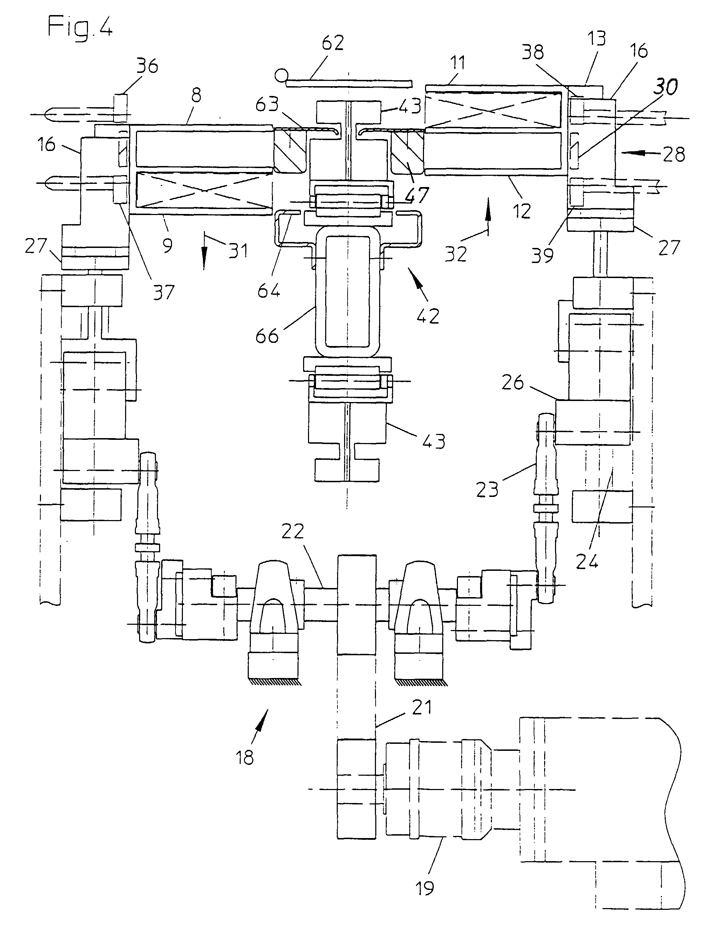

Nachdem beide Aufnahmetaschen 9 und 11 mit Zigarettenpackungen 2 aufgefüllt sind, d. h. im vorliegenden Fall mit jeweils fünf Zigarettenpackungen, werden durch die entgegengesetzt exzentrisch angreifenden Hubantriebsmittel 18 gemäß Figur 4 die doppelten Aufnahmetaschen 8, 9 in Pfeilrichtung 31 abwärts und die doppelten Aufnahmetaschen 11 und 12 in Pfeilrichtung 32 aufwärts bewegt. Damit gelangen die gefüllten Aufnahmetaschen 9 und 11 in die Überführungsebenen 33 bzw. 34 und die leeren Aufnahmetaschen 8 und 12 auf das Niveau der Reihenbildungsebene 28.

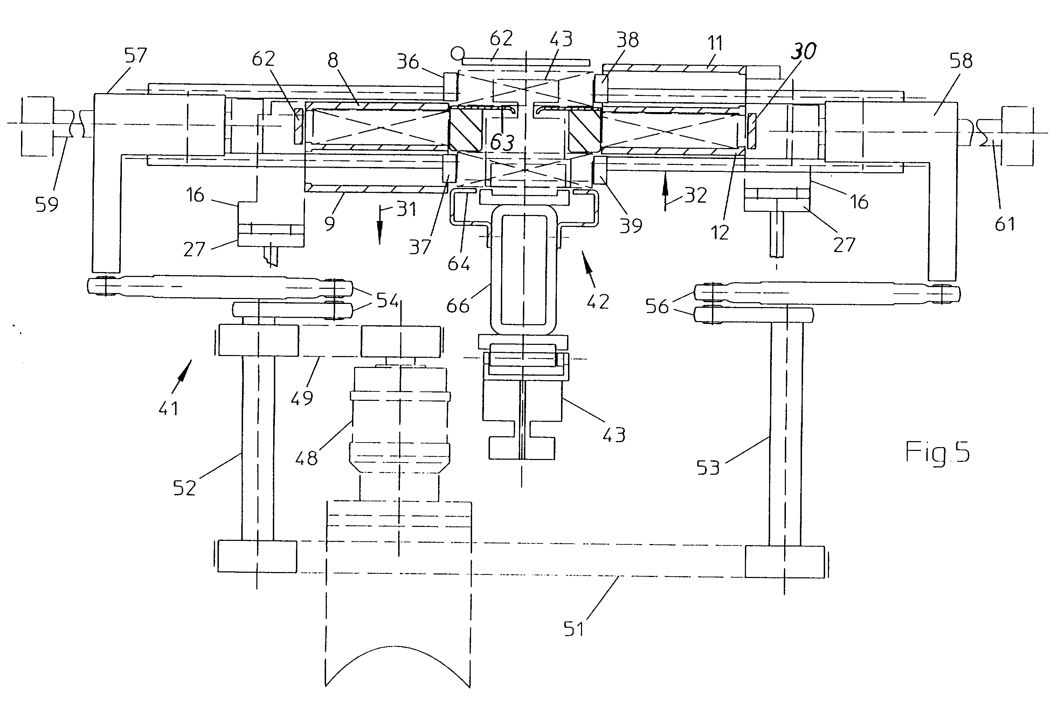

Anschließend überführen gemäß Figur 5 die Stößel 37 und 38 der Quertransportmittel 41 die Packungsreihen auf die untere bzw. obere Überführungsebene 33 bzw. 34, wobei die beiden anderen Stößel 36 und 39 einen Leerhub ausführen. Gleichzeitig werden die nunmehr in der Reihenbildungsebene 28 plazierten Aufnahmetaschen 8 und 12 schon wieder auf zuvor beschriebene Weise mit Zigarettenpackungen 2 aufgefüllt, was aus Figur 5 zu ersehen ist.

Die gemeinsam zur Mitte bzw. zu den Vereinigungsfördermitteln 42 hin überführten Packungsreihen werden anschließend gefesselt durch die Mitnehmer 43 der aktivierten Längsfördermittel 44 gemäß Figur 2 aus der Überführungsvorrichtung 1 herausbewegt, wobei die Stößel 36 bis 39 als Seitenführungen dienen. Bei einem Ausschub aus der Überführungsvorrichtung 1 gleitet die obere Packungsreihe auf der sich anschließenden Rampe 47 der Vereinigungsfördermittel 42 abwärts und wird dabei nach Verlassen der Rampe nach und nach auf die untere Packungsreihe abgelegt, so daß schließlich eine Reihenformation 7 aus zwei aufeinanderliegenden Packungsreihen gebildet wird, die der Weiterverarbeitung zugeführt werden kann.

Beim nächsten Arbeitszyklus der Überführungsvorrichtung 1 werden in Hubrichtungsumkehr die Aufnahmetaschen 8 und 9 aufwärts und die Aufnahmetaschen 11 und 12 abwärts bewegt. Die spezifische Abfolge der Überführungs-, Hub- und Förderbewegungen innerhalb der Überführungsvorrichtung 1 gewährleistet eine hohe Förderleistung bei der zweibahnigen Einzelentnahme von Zigarettenpackungen und deren Überführung in eine einbahnige Reihenformation.

## Patentansprüche

1. Verfahren zum Bilden einer zweilagigen Reihenformation (7) aus auf zwei parallel nebeneinander verlaufenden Bahnen (3, 4) zugeführten Packungen (2) der tabakverarbeitenden Industrie, dadurch gekennzeichnet, daß auf einer einheitlichen Ebene (28) der beiden Bahnen (3, 4) zwei jeweils einer der beiden Bahnen (3 bzw. 4) zugeordnete Packungsreihen aus mehreren hintereinanderliegenden Packungen (2) gebildet werden, daß die gebildeten Packungsreihen der beiden Bahnen wechselweise auf zwei vertikal zueinander beabstandete Ebenen (33 bzw. 34) angehoben bzw. abgesenkt werden, daß die Packungsreihen auf den beiden Ebenen seitlich zur Mitte hin in eine übereinanderliegende Anordnung verschoben werden, wobei gleichzeitig zwei weitere Packungsreihen auf der einheitlichen Ebene gebildet werden, und daß die beiden übereinander angeordneten Packungsreihen anschließend im Zuge ihrer Abförderung aufeinandergelegt werden.

2. Verfahren nach Anspruch 1, dadurch gekennzeichnet, daß die Packungsreihen durch kontinuierliche Verminderung ihres vertikalen Abstandes aufeinandergelegt werden.

3. Verfahren nach Anspruch 1 oder 2, dadurch gekennzeichnet, daß die Pakkungsreihen in Richtung der hintereinandergereihten Packungen (2) abgefördert werden.

4. Verfahren nach einem der Ansprüche 1 bis 3, dadurch gekennzeichnet, daß die obere Packungsreihe bei der Abförderung entlang einer schiefen Ebene (47) auf die untere Packungsreihe abgesenkt wird.

5. Verfahren nach einem der Ansprüche 1 bis 4, dadurch gekennzeichnet, daß die Packungen (2) zur Bildung der Packungsreihen von ihren parallelen Zuführbahnen (3, 4) nacheinander auf die einheitliche Ebene (28) angehoben werden.

6. Verfahren nach einem der Ansprüche 1 bis 5, dadurch gekennzeichnet, daß die Packungen (2) durch stoßweisen Einzelvorschub hintereinandergereiht werden.

7. Verfahren nach einem der Ansprüche 1 bis 6, dadurch gekennzeichnet, daß die Packungen (2) ihre Position innerhalb der Packungsreihe unter definierter Verdrängung eines sich vor ihrer der Förderrichtung zugewandten Stirnfläche ausbildenden Luftpolsters einnehmen.

8. Vorrichtung zum Bilden einer zweilagigen Reihenformation (7) aus durch zwei parallel nebeneinander verlaufende Bahnfördermittel (3, 4) zugeführten Pakkungen (2) der tabakverarbeitenden Industrie, dadurch gekennzeichnet, daß den Bahnfördermitteln (3, 4) jeweils zwei übereinanderliegende und durch Hubantriebsmittel (18) relativ zu einer einheitlichen Reihenbildungsebene (28) paarweise abwechselnd in entgegengesetzten Richtungen auf zwei vertikal zueinander beabstandete Überführungsebenen (33, 34) anhebbare bzw. absenkbare Aufnahmetaschen (8, 9; 11, 12) zugeordnet sind, welche in ihrer jeweiligen Wechselstellung auf der Reihenbildungsebene mit aus den Packungen (2) Packungsreihen in den Aufnahmetaschen bildenden Einstoßfördermitteln (29) und auf den vertikal beabstandeten Überführungsebenen mit die wechselweise anhebbaren bzw. absenkbaren Packungsreihen seitlich zu zentralen Vereinigungsfördermitteln (42) überführenden und übereinanderliegend positionierenden Quertransportmitteln (41) in Wirkverbindung stehen, wobei die auf der Reihenbildungsebene wirksamen Einstoßfördermittel und die auf den Überführungsebenen wirksamen Quertransportmittel in der jeweiligen Wechselstellung der Aufnahmetaschen gleichzeitig aktivierbar sind, und daß die Vereinigungsfördermittel eine vertikale Förderkomponente für wenigstens eine Packungsreihe aufweisende Längsfördermittel (44) umfassen.

9. Vorrichtung nach Anspruch 8, dadurch gekennzeichnet, daß die Längsfördermittel (44) eine die obere Packungsreihe aufnehmende, in Förderrichtung (Pfeil 46) abwärts geneigte Rampe (47) umfassen.

10. Vorrichtung nach Anspruch 8 oder 9, dadurch gekennzeichnet, daß zwischen den parallelen Bahnfördermitteln (3, 4) und der Reihenbildungsebene (28) Hubfördermittel (67) vorgesehen sind.

11. Vorrichtung nach einem der Ansprüche 8 bis 10, dadurch gekennzeichnet, daß auf der Reihenbildungsebene (28) Einzelpackungen (2) beaufschlagende Einstoßfördermittel (29) vorgesehen sind.

12. Vorrichtung nach einem der Ansprüche 8 bis 11, dadurch gekennzeichnet, daß den Einstoßfördermitteln (29) eine die Aufnahmetaschen (8, 9; 11, 12) auf der Reihenbildungsebene (28) an ihrer den Quertransportmitteln (36 bis 39) zugewandten offenen Längsseite unter Aufrechterhaltung eines definierten Abstandsspalts begrenzende ortsfeste Abdeckung (30) zugeordnet ist.

13. Vorrichtung nach einem der Ansprüche 8 bis 12, dadurch gekennzeichnet, daß jeweils zwei übereinander angeordnete Aufnahmetaschen (8, 9; 11, 12) als von den Hubantriebsmitteln (18) lösbare Kassette (13) ausgebildet sind.

## Claims

1. Method of forming a two-layer row formation (7) of packets (2) for the tobacco-processing industry which are delivered on two tracks (3, 4) running parallel alongside one another, characterised in that, on a uniform plane (28) of the two tracks (3, 4), two rows of packets are formed from a plurality of packets (2) lying one behind the other, each row of packets being associated with one of the two tracks (3, 4 respectively), that the formed rows of packets of the two tracks are raised or lowered alternately onto two planes (33, 34 respectively) which are vertically spaced with respect to one another, that the rows of packets on the two planes are moved sideways towards the centre into an arrangement where they lie one above the other, two further rows of packets being simultaneously formed on the uniform plane, and that the two rows of packets which lie one above the other are then laid on top of one another in the course of being removed.

2. Method according to Claim 1, characterised in that the rows of packets are laid one on top of the other by continuous reduction of their vertical spacing.

3. Method according to Claim 1 or 2, characterised in that the rows of packets are removed in the direction of the packets (2) which are lined up one behind the other.

4. Method according to one of Claims 1 to 3, characterised in that the upper row of packets is lowered onto the lower row of packets during removal along an inclined plane (47).

5. Method according to one of Claims 1 to 4, characterised in that the packets (2) are raised in succession onto the uniform plane (28) from their parallel delivery tracks (3, 4) in order to form the rows of packets.

6. Method according to one of Claims 1 to 5, characterised in that the packets (2) are lined up one behind the other by intermittent individual advance.

7. Method according to one of Claims 1 to 6, characterised in that the packets (2) assume their position within the row of packets by defined displacement of an air cushion which forms in front of their end face facing the transport direction.

8. Apparatus for forming a two-layer row formation (7) of packets (2) for the tobacco-processing industry which are delivered on two track conveyor means (3, 4) running parallel alongside one another, characterised in that associated in each case with the track conveyor means (3, 4) are two receptacles (8, 9; 11, 12) which lie one above the other and can be raised or lowered in pairs by lifting drive means (18) relative to a uniform row-forming plane (28) alternately in opposite directions onto two transfer planes (33, 34) which are vertically spaced with respect to one another, these receptacles in their respective alternate position being in operative connection on the row-forming plane with pushing conveyor means (29) which from the packets (2) form rows of packets in the receptacles and on the vertically spaced transfer planes with transverse transport means (41) by which the rows of packets which can be alternately raised and lowered are transferred laterally with respect to central combining conveyor means (42) and are positioned so that they lie one above the other, wherein the pushing conveyor means which are active on the row-forming plane and the transverse transport means which are active on the transfer planes can be activated simultaneously in the respective alternate position of the receptacles, and that the combining conveyor means comprise a vertical conveying component for longitudinal conveyor means (44) having at least one row of packets.

9. Apparatus according to Claim 8, characterised in that the longitudinal conveyor means (44) comprise a ramp (47) which receives the upper row of packets and is inclined downwards in the transport direction (arrow 46).

10. Apparatus according to Claim 8 or 9, characterised in that lifting conveyor means (67) are provided between the parallel track conveyor means (3, 4) and the row-forming plane (28).

11. Apparatus according to one of Claims 8 to 10, characterised in that pushing conveyor means (29) which act on individual packets (2) are provided on the row-forming plane (28).

12. Apparatus according to one of Claims 8 to 11, characterised in that a stationary cover (30) is associated with the pushing conveyor means (29), this stationary cover delimiting the receptacles (8, 9; 11, 12) on the row-forming plane (28) on their open long side facing the transverse transport means (36 to 39) whilst maintaining a defined gap.

13. Apparatus according to one of Claims 8 to 12, characterised in that in each case receptacles (8, 9; 11, 12) which are disposed one above the other are constructed as a cassette (13) which can be released from the lifting drive means (18).

## Revendications

1. Procédé pour former un groupement en rangées sur deux niveaux (7) de paquets (2) du secteur de l'industrie de transformation du tabac, amenés sur deux voies (3, 4) s'étendant l'une à côté de l'autre dans des directions parallèles, caractérisé en ce que sur un plan commun (28) des deux voies (3, 4), sont formées deux rangées de plusieurs paquets (2) placés l'un derrière l'autre, chacune associée à l'une respective des deux voies (3 ou 4), en ce que les rangées de paquets formées des deux voies sont en alternance élevées et abaissées jusque sur deux plans (33, resp. 34) espacés l'un de l'autre dans le sens vertical, en ce que les rangées de paquets situées sur les deux plans sont déplacées latéralement vers le centre jusqu'à être disposées l'une au-dessus de l'autre, deux autres rangées de paquets étant dans le même temps formées sur le plan commun, et en ce que les deux rangées de paquets disposées l'une au-dessus de l'autre sont ensuite déposées l'une sur l'autre au cours de leur transport ultérieur.

2. Procédé selon la revendication 1, caractérisé en ce que les rangées de paquets sont déposées l'une sur l'autre par diminution continue de leur espacement vertical.

3. Procédé selon la revendication 1 ou 2, caractérisé en ce que le transport ultérieur des rangées de paquets se fait dans la direction des paquets (2) mis l'un derrière l'autre en rangée.

4. Procédé selon l'une des revendications 1 à 3, caractérisé en ce que la rangée supérieure de paquets est descendue le long d'un plan incliné (47) sur la rangée inférieure de paquets, lors du transport ultérieur.

5. Procédé selon l'une des revendications 1 à 4, caractérisé en ce que les paquets (2), en vue de la formation des rangées de paquets, sont élevés l'un après l'autre de leurs voies parallèles d'amenée (3, 4) jusque sur le plan commun (28).

6. Procédé selon l'une des revendications 1 à 5, caractérisé en ce que les paquets (2) sont mis l'un derrière l'autre en rangée en étant avancés individuellement par poussée.

7. Procédé selon l'une des revendications 1 à 6, caractérisé en ce que les paquets (2) prennent leur position à l'intérieur de la rangée de paquets en produisant un refoulement contrôlé d'un matelas d'air se formant devant leur surface frontale tournée dans la direction de transport.

8. Dispositif pour former un groupement en rangées sur deux niveaux (7) de paquets (2) du secteur de l'industrie de transformation du tabac, amenés par deux moyens transporteurs en forme de voie (3, 4) s'étendant l'un à côté de l'autre dans des directions parallèles, caractérisé en ce qu'aux moyens transporteurs en forme de voie (3, 4) sont associées des paires respectives de poches de réception superposées (8, 9 ; 11, 12) qui peuvent, sous l'action de moyens d'entraînement élévateurs (18), être alternativement élevées et abaissées, par paires, dans des sens opposés, par rapport à un plan commun de formation de rangées (28), jusque sur deux plans de transfert (33, 34) espacés l'un de l'autre dans le sens vertical, et qui, dans leur position d'inversion respective, coopèrent, sur le plan de formation de rangées, avec des moyens transporteurs par poussée (29) formant, à partir des paquets (2), des rangées de paquets dans les poches de réception et, sur les plans de transfert espacés dans le sens vertical, avec des moyens de déplacement transversal (41) transférant sur le côté, en direction de moyens transporteurs centraux de regroupement (42), et positionnant l'une au-dessus de l'autre les rangées de paquets pouvant être alternativement élevées et abaissées, les moyens transporteurs par poussée, intervenant sur le plan de formation de rangées, et les moyens de déplacement transversal, intervenant sur les plans de transfert, pouvant alors être rendus actifs simultanément dans la position d'inversion respective des poches de réception, et en ce que les moyens transporteurs de regroupement comprennent des moyens de transport longitudinal (44) comportant un composant vertical de transport pour au moins une rangée de paquets.

9. Dispositif selon la revendication 8, caractérisé en ce que les moyens de transport longitudinal (44) comprennent une rampe (47) inclinée vers le bas dans la direction de transport (flèche 46), qui reçoit la rangée supérieure de paquets.

10. Dispositif selon la revendication 8 ou 9, caractérisé en ce qu'entre les moyens transporteurs parallèles en forme de voie (3, 4) et le plan de formation de rangées (28), sont prévus des moyens transporteurs élévateurs (67).

11. Dispositif selon l'une des revendications 8 à 10, caractérisé en ce que sur le plan de formation de rangées (28), sont prévus des moyens transporteurs par poussée (29) agissant sur des paquets individuels (2).

12. Dispositif selon l'une des revendications 8 à 11, caractérisé en ce qu'aux moyens transporteurs par poussée (29) est associé un élément de recouvrement fixe (30) délimitant les poches de réception (8, 9 ; 11, 12) sur le plan de formation de rangées (28), le long de leur face longitudinale ouverte tournée vers les moyens de déplacement transversal (36 à 39), tout en maintenant un interstice déterminé.

13. Dispositif selon l'une des revendications 8 à 12, caractérisé en ce que chaque paire de poches de réception (8, 9 ; 11, 12), disposées l'une au-dessus de l'autre, est réalisée sous forme d'une cassette (13) séparable des moyens d'entraînement élévateurs (18).
